# EUROPEAN PATENT APPLICATION

(11) **EP 0 813 898 A1**
(43) Date of publication of application: **29.12.1997**
(21) Application number: 97304321.9
(22) Date of filing: 19.06.1997
(51) Int. Cl.: B01D 46/42, B65D 51/16, G21F 5/06

(54) **Vent filter assembly**

(30) Priority: 19.06.1996 US 20335 P
(71) Applicant: Pall Corporation, East Hills, New York 11548 (US)
(72) Inventor: Rahimi, Riazuddin S., Cortland, New York 13045 (US)
(74) Representative: Bibby, William Mark

(57) **Abstract**

A vent filter assembly (10) including a cover (32) which can withstand a given force applied to the major surface of the cover without significantly impairing the filtering ability of the vent filter assembly is disclosed.

## Description

This invention relates generally to containers for the storage of radioactive waste and, more specifically, to particulate filter assemblies for such containers.

The nuclear power generation industry and the nuclear weapons manufacturing industry both generate large amounts of radioactive waste which may be in either a solid or a liquid form. Since the half life of nuclear materials can be as long as several thousand years, this radioactive waste must be physically isolated from the outside environment until it is no longer dangerously radioactive. Typically, this means placing the generated radioactive waste within a storage bag and then placing the storage bag within a sealed container for storage. The generated radioactive waste within the container may also generate gases which, if not vented, would increase the pressure within and would ultimately damage the container. In order to prevent this, the sealed container typically includes at least one outlet vent and a filter assembly positioned across each outlet vent in order to prevent the release of undesirable matter (e.g., particulates) from the storage container.

U.S. Patent No. 5,353,949 entitled VENT FILTER ASSEMBLY, which is hereby incorporated by reference for its teaching of vent filter assemblies, describes the current vent filter assemblies. The vent filter assembly includes a housing coupled to a storage container. The housing includes a first opening communicating with the exterior of the container and a second opening communicating with the interior of the container. The housing defines a gas flow path between the first and second openings. A filter is coupled to the housing and is disposed across the gas flow path such that gas flowing between the openings flows through the filter. The vent filter assembly also includes a cover which is secured to the housing and which is disposed over the second opening. The cover physically isolates the filter from the outside environment, and can have portions spaced from the housing to permit gas to pass therebetween.

Currently, many vent filter assemblies are typically constructed of plastic because plastic is inexpensive and easy to mold. Unfortunately, plastic vent filter assemblies are also highly susceptible to physical shock from the external environment. Specifically, a tool or other heavy object might fall onto the plastic cover of the housing. Alternatively, a storage container including a plastic vent filter assembly might be accidentally struck, tip over, and then fall, causing the plastic vent filter assembly to strike another storage container and/or the ground. In either case, the resulting force applied to the plastic vent filter assembly may (a) damage the plastic assembly, (b) significantly impair the filtering ability of the vent filter assembly, and/or (c) expose or spill the radioactive waste via the vent hole.

Vent filter assemblies may also soon face new and more stringent federal standards, namely, Department of Energy (hereinafter referred to as DOE) type A requirements and DOE Idaho National Energy Laboratories (hereinafter referred to as INEL) requirements. The DOE type A requirements include a requirement that the cover of the vent filter assembly be able to withstand a given force applied perpendicularly to the major surface of the cover without affecting the filter mounted within the housing. Specifically, a 13.5 pound rod is dropped from a height of 40 inches onto the cover of the vent filter assembly. This requirement is known as the "rod penetration test". It is intended to prevent the potentially dangerous consequences associated with the accidental dropping of a tool through the cover, namely, the exposure of the radioactive waste to the external environment via a hole through the cover and the filter. Similarly, the DOE INEL test requirements include a requirement for the volatile organic carbon testing (hereinafter referred to as VOC test) of the gases within the interior of the storage container.

One aspect of the invention includes a vent filter assembly having a cover which can withstand a given force applied to the major surface of the cover without significantly impairing the filtering ability of the vent filter assembly.

Another aspect of the invention includes a vent filter assembly which allows for the easy removal and sampling of material from the interior of the storage container without having to remove the vent filter assembly from the storage container.

Still another aspect of the invention includes a vent filter assembly including a strengthened cover and/or a sampling aperture disposed through either the housing, the filter, the cover, or combinations thereof. A removable plug may be disposed in the sampling aperture to prevent unwanted bypass of the filter.

In an exemplary embodiment, the vent filter assembly includes a housing and a filter. The housing, which may be secured to the storage container in any suitable manner, defines a gas flow path between a first aperture and a second aperture, wherein the second aperture can communicate with the interior of the storage container and the first aperture can communicate with the exterior of the storage container. The filter is coupled to the housing and is disposed across the gas flow path such that gas flowing between the first and second apertures flows through the filter. The filter may be secured to the housing in a variety of ways.

In accordance with another aspect of the present invention, a strengthened cover, typically comprised of either metal or high strength plastic and usually stainless steel, high density polyethylene, nylon, or polyethersulfone, is disposed over the housing. The strengthened cover ensures that the vent filter assembly can withstand significant force without substantially impairing the filtering ability of the vent filter assembly. Alternatively or additionally, the strengthened cover may be arranged to transmit these forces directly to the storage container. Illustratively, a vent filter assembly, joined to a container, can have a strengthened cover with a rim and a housing with a flange. The strengthened cover may be disposed over the housing. A peripheral surface of the flange and an inner surface of the rim of the strengthened cover may be cooperatively joined by, for example, complementary threads. When mated together, sufficient tolerance may exist between the complementary threads so that the rim may temporarily rest on the top surface of the storage container if the strengthened cover is subjected to an impacting force. This allows the strengthened cover to transmit forces applied to the cover's major surface directly to the storage container, bypassing the remainder of the vent filter assembly. Alternatively, the strengthened cover may be arranged to spread any potentially damaging forces over a large contact area before transmitting them to the housing. Typically, the cover is in substantial contact with the housing. For example, the cover may be face bonded, welded, or adhesive bonded to a large upper surface of the flange of the housing. In this alternative, the magnitude of any forces applied to the cover's major surface can be effectively dissipated over the large contact area in a nondestructive manner.

In accordance with a further aspect of the present invention, at least one sampling aperture is disposed in the vent filter assembly, e.g., through one or more of the housing, the cover, and the filter, which allows for the easy removal of gases or other matter from the interior of the storage container without having to remove the vent filter assembly from the storage container aperture. Any suitable mechanism, such as a removable plug with an O-ring or gasket, may be disposed in the sampling aperture to prevent any unwanted bypass of the filter.

Advantageously, the present invention provides for a vent filter assembly which (a) can withstand a given force applied to the major surface of the cover without significantly impairing the filtering ability of the vent filter assembly and/or (b) allows for the easy removal or sampling of material from the interior of the storage container without having to remove the vent filter assembly from the storage container.

Other advantages of this invention will become apparent from the detailed description that follows.

The following is a more detailed description of embodiments of the invention, by way of example only, reference being made to the accompanying drawings in which:-

FIGURE 1A is a cross sectional view of a first embodiment of a vent filter assembly according to the teachings of the invention mountable to a storage container.

FIGURE 1B is a top view of the first embodiment of the vent filter assembly shown in FIGURE 1A with a sub-section illustrating the filter beneath the cover.

FIGURE 2A is a cross sectional view of a second embodiment of a vent filter assembly according to the teachings of the invention mountable to a storage container.

FIGURE 2B is a top view of the second embodiment of the vent filter assembly shown in FIGURE 2A with a sub-section illustrating the filter beneath the cover.

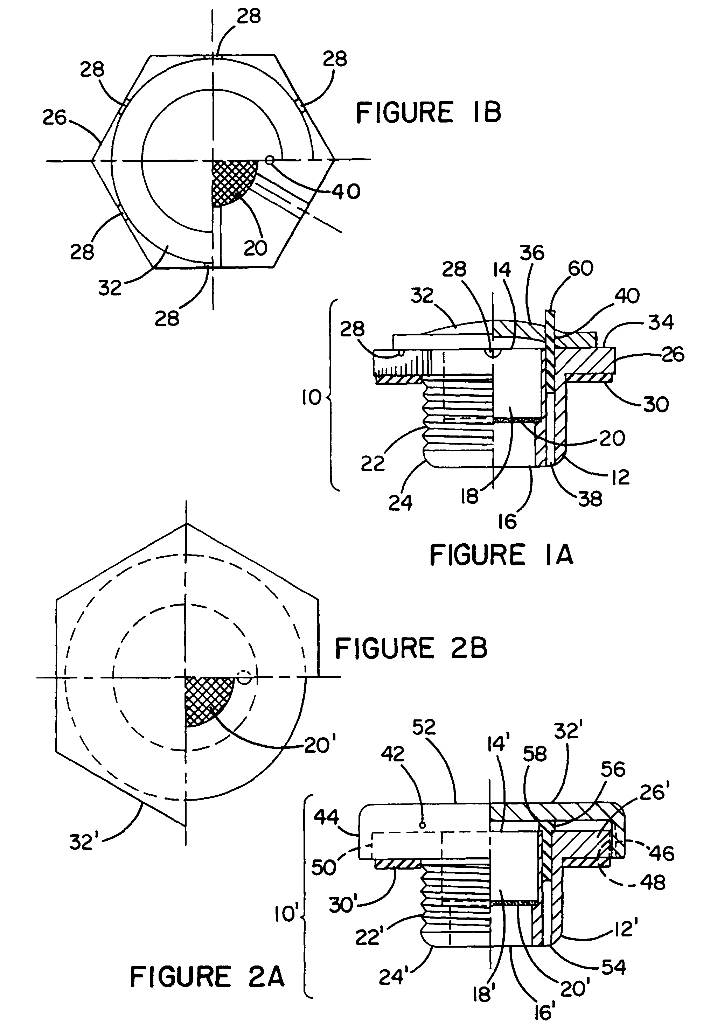

Referring now to FIGURE 1A, there is shown a partial cross sectional and partial side view of a vent filter assembly 10 which is usually disposed within an aperture (not shown) (hereinafter referred to as storage container aperture) of a storage container (not shown) used for the storage of radioactive waste. The vent filter assembly 10 includes a housing 12 that has a first aperture 14, an opposite second aperture 16, and a cavity 18 between the first and second apertures. The housing 12 defines a gas flow path between the first aperture 14 and the second aperture 16, wherein the second aperture 16 can communicate with the interior of the storage container and the first aperture 14 can communicate with the exterior of the storage container. A filter 20 is arranged with the housing 12 to filter gas flowing along the gas flow path. For example, the filter 20 may be disposed in the cavity 18 and across the gas flow path such that gas flowing between the first and second apertures flows through the filter 20. After passing through the filter 20, the gas exits the vent filter assembly 10 through the vent outlets 28. Typically, the filter 20 is secured to the housing 12 by a variety of different means, such as, welding, brazing, adhesives, mechanical crimping, mechanical swaging, or any other suitable means.

The filter 20 may comprise any suitable filter medium, including a polymeric, ceramic, metallic, or carbonic material. Preferably, the filter 20 is capable of removing particulate contaminants such as solid particles and/or liquid aerosols.

The filter may have one or more of the following characteristics: (a) the filter is preferably HEPA rated, i.e., has an efficiency of at least 99.97% with 0.3 to 0.5 micron particles of DOP (dioctylphthalate) smoke; (b) the flow of air through the filter is preferably no less than 200 milliliters/minute at one inch of water gauge pressure drop; (c) the hydrogen diffusivity of the filter is preferably at least about 1.9 x 10⁻⁶ mole/second mole fraction measured at room temperature (25°C); and (d) the filter is preferably hydrophobic, i.e., resists wetting, both initially and after a predetermined exposure to radiation.

Hydrophobic filters resist wetting, thereby maintaining an effective moisture barrier between an exterior and interior of the storage container. A gas-permeable moisture barrier is especially advantageous in the storage of radioactive waste. Water vapor may otherwise enter a radioactive waste container through the vent filter assembly and react with the waste. Also, water vapor within a metallic waste drum can potentially initiate corrosion of the waste drum, thereby weakening its structural integrity. A hydrophobic filter can be partially or fully hydrophobic. Hydrophobicity may either be inherent in a filter medium or imparted to a filter medium by known methods. An example of a partially and inherently hydrophobic material is stainless steel.

The housing 12 may be secured to the storage container in any suitable manner. For example, the housing may be held within the storage container aperture by frictional forces or by welding. Alternatively, the housing 12 may include threads 22 disposed along a peripheral surface 24 which mate with complementary threads (not shown) in the storage container aperture. The housing 12 also includes a portion having a radially extending flange 26. As best shown in FIGURE 1B, the radially extended flange 26 is preferably hexagonal and includes a plurality of vent outlets 28. The plurality of vent outlets 28 communicate with the first aperture 14 in the housing 12 and allow for the venting of filtered gas from the interior of the storage container to the external environment. Referring back to FIGURE 1A, the hexagonal shape of the flange 26 helps in the securing of the vent filter assembly 10 into the storage container aperture because a standard wrench (not shown) can be used. Alternatively, to prevent tampering, the shape of the flange 26 may be such that it requires the use of a specialized tool for the insertion and removal of the vent filter assembly 10 from the storage container aperture.

When the housing threads 22 are mated with the complementary threads in the storage container, the flange 26 rests above a surface (not shown) of the storage container and a gasket 30 is disposed therebetween. The gasket 30 seals the housing 12 to the storage container and prevents leakage between the adjacent surfaces. The gasket 30 is preferably fabricated from materials which resist deterioration due to both radioactivity and environmental conditions, such as heat and humidity.

In accordance with one aspect of the invention, a strengthened cover 32 may be disposed over the first opening 14 and can be secured to the housing 12 in any suitable manner. For example, the strengthened cover 32 may be face bonded, welded, adhesively bonded or mechanically connected to an upper surface 34 of the flange 26. Preferably, a large contact area exists between the strengthened cover 32 and the upper surface 34 of the flange 26. This large contact area is particularly advantageous because the magnitude of any forces applied to a major surface 36 of the cover can be effectively dispersed or dissipated over this large contact area and transmitted through the housing 12 to the storage container (not shown) in a nondestructive manner. The size of the contact area is selected depending upon (1) the magnitude of the anticipated maximum force that might be applied to the major surface 36 of the cover 32, (2) the material used for the housing 12, and (3) the material and thickness used for the strengthened cover 32.

Any appropriate material and thickness can be used for the strengthened cover 32 as long as the chosen material and thickness allow the strengthened cover 32 to withstand a given magnitude of force applied to the major surface 36 without significantly impairing the filtering ability of the vent filter assembly 10.

The strengthened cover 32 may be made of any suitable material and may have any suitable dimension, but is preferably impact resistant. If the cover 32 is made of a metal, the metal is preferably stainless steel or a nickel alloy. The cover 32 may also be made of a high strength plastic such as high density polyethylene, nylon, polycarbonate or polyethersulfone. Impact resistant plastics also include plastic compositions having fillers such as fibers or impact modifiers such as elastomeric particles. The thickness of the cover may be between about 60/1000 and about 250/1000 of an inch with a preferable thickness of about 1/8 of an inch.

Advantageously, by providing a strengthened cover 32, the housing 12 and the filter 20 may be formed from less robust materials. For example, in the embodiment illustrated in FIGURES 1A and 1B, the housing 12 may be formed from a nonmetallic material, such as a polymeric material, which is less robust than the material of the strengthened cover but is nonetheless capable of withstanding the dispersed or dissipated forces transmitted from the strengthened cover 32. By combining the strengthened cover 32 with the less robust housing 12 and filter 20, the vent filter assembly 10 is less expensive and is also highly effective and reliable. The strengthened cover 32 fully protects the less robust housing 12 and filter 20 from potential physical shock introduced by the external environment.

In accordance with another aspect of the invention, one or more sampling apertures may be disposed through the elements of the vent filter assembly 10, e.g., the housing 12, the filter 20, the cover 32, and combinations thereof. Preferably, the sampling aperture is a gas sampling aperture. The ability to quickly sample the filtered or unfiltered contents of a waste storage container is especially advantageous. For example, changes in the contents of a waste container can be easily detected by sampling the contents of the waste container over time to see what, if any, changes have taken place.

As shown in Figure 1A, the sampling apertures 38 and 40, respectively, are disposed through the housing 12 and the cover 32. Alternatively, the sampling apertures may be disposed through the filter and the cover, between the housing and the filter, or through any other suitable combination of elements or single element. Collectively, these sampling apertures, 38 and 40, may bypass the porous filter and allow for the removal of and the subsequent test of the unfiltered gases, liquids and/or solids from the interior of the storage container (not shown) without having to remove the vent filter assembly 10 from the storage container aperture (not shown). Preferably, the sampling apertures are gas sampling apertures. The sampling apertures 38 and 40 are preferably between about 1/32 and about 1/8 of an inch in diameter and are more preferably about 1/16 of an inch in diameter. The particular position of the sampling aperture is not limited, and may even be located within the threads of the housing 12.

Any suitable mechanism may be arranged with the sampling apertures to selectively seal the apertures when the interior of the container is not being sampled, thereby preventing any unwanted bypass of the filter. For example, as shown in Figure 1A, a removable plug 60 may be disposed in the sampling apertures 38 and 40. The removable plug 60 may be cylindrical, and may be disposed and held within the sampling apertures 38 and 40 by frictional forces. The removable plug 60 can be fabricated from an elastomeric polymer, stainless steel or any other appropriate material.

Referring now to FIGURES 2A and 2B where like numerals designate previously described elements, there is shown a second embodiment of the vent filter assembly 10' which is usually disposed within a storage container aperture (not shown). The vent filter assembly 10' includes a housing 12', a filter 20', and a gasket 30' which are analogous to the housing 12, the filter 20, and the gasket 30 of the first embodiment. For example, the housing 12' of the second embodiment has a first aperture 14', an opposite second aperture 16', and a cavity 18' between the first and second apertures. The housing 12' defines a gas flow path between the first aperture 14' and the second aperture 16' and the filter 20' is arranged with housing 12' to filter gas flowing along the gas flow path. The housing 12' may be secured to the storage container (not shown) in any suitable manner. For example, the housing 12' may include threads 22' disposed along a peripheral surface 24' which mate with complementary threads (not shown) in the storage container. When the housing threads 22' are mated with the complementary threads, the flange 26' rests above a top surface (not shown) of the storage container. A gasket 30' or other spacing material may be disposed therebetween to seal the housing 12' to the storage container and prevent leakage between the adjacent surfaces.

Again, in accordance with one aspect of the invention, a strengthened cover 32' may be disposed over the housing 12'. For example, as shown in FIGURE 2A, a rim 44 of the strengthened cover 32' is screwed over the flange 26' of the housing 12' which secures the strengthened cover 32' to the housing 12'. Specifically, the rim 44 includes threads 46 which mate with complementary threads 48 disposed along an outer peripheral surface 50 of the flange 26' to connect the housing 12' to the strengthened cover 32'. When mated together, the bottom edge of rim 44 preferably extends to the gasket 30' and may lie adjacent to, or over the gasket 30'. The bottom edge of the rim may also be directly on or spaced above the top surface of the storage container. Preferably, there is sufficient tolerance between the threads 46 and the complementary threads 48 such that, if the rim 44 lies over the gasket 30, any major force applied to a major surface 52 of the cover 32' will compress the gasket 30' such that the lower edge of the rim 44 directly contacts the storage container, causing the force to be transmitted to the surface of the storage container. This brief contact between the strengthened cover 32' and the storage container allows the strengthened cover 32' to efficiently transmit major forces applied to the major surface 52 of the cover 32' directly to the storage container, largely bypassing the remainder of the vent filter assembly. Alternatively, the threads 46 and the complementary threads 48 may be designed to shear off in response to a major force being applied to the major surface 52, causing the rim 44 to rest on the top surface of the storage container. Direct contact between the strengthened cover 32' and the storage container allows the strengthened cover 32' to efficiently transmit major forces applied to the major surface 52 of the cover 32' directly to the storage container, largely bypassing the remainder of the vent filter assembly. Alternatively, the strengthened cover may be disposed over the housing and secured by any appropriate means directly to the storage container without being connected to the housing. This would allow the strengthened cover 32' to transmit forces applied to the major surface 52' directly to the storage container and to completely bypass the remainder of the vent filter assembly. Furthermore, if desired, a compression spring or additional elastomeric material may be between the bottom edge of rim 44 and the storage container (not shown) to help absorb any impact upon the cover 32' as well as to transmit any impacting forces to the storage container. By providing a strengthened cover 32' which transmits physical forces to the storage container while bypassing the housing 12', the housing 12' and the filter 20' may be fashioned from materials which are similar to or even less robust than those of the first embodiment without any reduction in the effectiveness or reliability of the vent filter assembly 10'.

The material and thickness of the strengthened cover 32' are selected depending upon the magnitude of the anticipated maximum force that might be applied to the major surface 52. This allows the strengthened cover 32' to withstand a given magnitude of force applied to the major surface 52 without significantly impairing the filtering ability of the vent filter assembly. The strengthened cover 32' is typically fabricated with the same materials as previously described for cover 32.

Referring to FIGURE 2A again, the rim 44 also includes a plurality of vent outlets 42 which communicate with the first aperture 14' in the housing 12'. This allows for the venting of filtered gases from the interior of the storage container to the external environment. As best shown in FIGURE 2B, the strengthened cover 32' is also hexagonal. The hexagonal shape of the strengthened cover 32' helps in the securing of the vent filter assembly 10' onto the storage container aperture because a standard wrench (not shown) can be used. However, the shape of the strengthened cover is not limited. For example, the cover can have a disk-like shape with frictional grooves around the edge to permit hand removal of the cover.

Again, in accordance with the second aspect of the invention, one or more sampling apertures may be disposed through the vent filter assembly 10' (e.g., the housing 12', the filter 20', the cover 32', and combinations thereof). As shown in Figure 2A, a sampling aperture 54 is disposed through the housing 12' which allows for the removal of and the subsequent test of the unfiltered gases or other matter from the interior of the storage container without having to remove the entire vent filter assembly 10' from the storage container. The sampling aperture 54 of the second embodiment may be the same size as the sampling apertures 38 and 40 of the first embodiment but preferably does not extend through the cover 32'.

Any suitable mechanism may be arranged with the sampling aperture to selectively seal the aperture, thereby preventing any unwanted bypass of the filter. As shown in FIGURE 2A, a removable plug 56 is disposed in the sampling aperture 54 which prevents any unwanted particulate bypass from escaping to the external environment. The removable plug 58 may be friction fitted within the sampling aperture 54 which prevents any unwanted bypass from escaping to the external environment. Alternatively, the removable plug 56 may include a radially extending flange 58 and an annular material (e.g., an O-ring or gasket) between the plug 56 and the housing 12'. The radially extending flange 58 prevents the plug 56 from being completely disposed within the sampling aperture 54 while the O-ring seals the plug 56 to the sampling aperture 54 to prevent any gas bypass. The removable plug 56 can be fabricated from an elastomeric polymer or any other appropriate material. The plug 56 is preferably dimensioned such that when the cover 32' is fully threaded onto the flange 26' of the housing 12', the cover 32' bears against the plug 56 and helps hold the plug 56 in place within the sampling aperture 54.

Vent filter and container assemblies embodying the invention: (a) may include a strengthened cover and one or more sampling apertures, as shown in Figures 1A, 1B, 2A, and 2B; (b) may include a strengthened cover but not include any sampling apertures; and (c) may include sampling apertures but not include a strengthened cover. In embodiments which do not include a strengthened cover, the components of the vent filter assembly may all be fashioned from the same material, e.g., a metal or a polymer, or they may be fashioned from different materials.

## Claims

1. A vent filter assembly comprising:
a housing defining a gas flow path;
a filter arranged within the housing and across the gas flow path; and
a strengthened cover over said housing.

2. The vent filter assembly of Claim 1 wherein the housing comprises a non-metal.

3. The vent filter assembly of any preceding claim wherein the cover comprises metal.

4. The vent filter assembly of any preceding claim wherein the housing comprises plastic.

5. The vent filter assembly of any preceding claim wherein the cover is in substantial contact with the housing.

6. The vent filter assembly of any preceding claim further comprising a gasket cooperatively arranged with said housing.

7. The vent filter assembly of any preceding claim wherein the housing includes a flange portion.

8. The vent filter assembly of claim 7 wherein the cover includes a rim which surrounds said flange portion of the housing.

9. The vent filter assembly of claim 8 wherein the rim of said cover and said flange portion of said housing are cooperatively joined.

10. The vent filter assembly of any of claims 1-7 wherein the cover includes a rim.

11. The vent filter assembly of any preceding claim further including a sampling aperture in at least one of said housing, cover or filter.

12. The vent filter assembly of any preceding claim wherein the filter comprises a HEPA filter.

13. The vent filter assembly of any preceding claim wherein the filter comprises a hydrophobic material.

14. A vent filter assembly comprising:
a housing defining a gas flow path;
a filter arranged within the housing and across the gas flow path;
a cover over said housing; and
at least one sampling aperture disposed in at least one of said housing, filter or cover.

15. The vent filter assembly of claim 14 further comprising a sealing mechanism disposed in said sampling aperture.

16. A container assembly for transporting or storing waste comprising:
a container defining an interior region and exterior region, and a vent filter assembly of any preceding claim mounted to the container.
